# NEUE EUROPÄISCHE PATENTSCHRIFT

(11) **EP 0 414 873 B2**
(45) Veröffentlichungstag und Bekanntmachung des Hinweises auf die Entscheidung über den Einspruch: **03.03.1999**
(45) Hinweis auf die Patenterteilung: 01.06.1994
(21) Anmeldenummer: 90904304.4
(22) Anmeldetag: 02.03.1990
(51) Int. Cl.: B60S 1/52, B60S 1/34

(54) **SCHEIBENREINIGUNGSANLAGE, INSBESONDERE FÜR KRAFTFAHRZEUGE**
WINDSCREEN CLEANING DEVICE, ESPECIALLY FOR MOTOR VEHICLES
ESSUIE-GLACE, CONVENANT EN PARTICULIER POUR LES VEHICULES AUTOMOBILES

(30) Priorität: 11.03.1989 DE 3907962
(43) Veröffentlichungstag der Anmeldung: 06.03.1991
(73) Patentinhaber: ITT Automotive Europe GmbH, 60488 Frankfurt am Main (DE)
(72) Erfinder: BAUER, Kurt, D-7121 Ingersheim 2 (DE); SCHMID, Eckhardt, D-7129 Brackenheim (DE); WALTHER, Bernd, D-7120 Bietigheim-Bissingen (DE)
(86) Internationale Anmeldenummer: EP9000345
(87) Internationale Veröffentlichungsnummer: WO9010562

(56) Entgegenhaltungen:
- DE-A- 3 643 476
- DE-C- 3 521 024
- DE-U- 8 100 709
- JP-A-61 247 543
- US-A- 2 483 243
- US-A- 2 609 561
- US-A- 3 760 451

## Beschreibung

Die Erfindung bezieht sich auf eine Scheibenreinigungsanlage, insbesondere für Kraftfahrzeuge gemäß den Merkmalen des Oberbegriffs des Anspruchs 1.

Es sind bereits Scheibenreinigungsanlagen bekannt, bei denen zwecks Verbesserung der Wirkung der Waschanlage die Waschflüssigkeit zu Düsen gefördert wird, die am Wischhebel angeordnet sind und mit diesem pendeln. Bei einer bekannten Ausführung dieser Art wird die Waschflüssigkeit durch eine Leitung innerhalb einer Bohrung in einer Wischerwelle gefördert, wobei das Endstück der Waschflüssigkeitsleitung am antriebsseitigen Ende der Wischerwelle axial in ein topfförmiges Anschlußstück hineintaucht, von dem radial ein Schlauchstutzen zum Anschluß eines Waschflüssigkeitszufuhrschlauches absteht. Bei einem solchen System pendelt die Waschflüssigkeitsleitung wie die Wischerwelle, während das Anschlußstück drehfest fixiert ist, weil sonst der Waschflüssigkeitszufuhrschlauch beim Betrieb der Wischanlage erheblich belastet würde und die Gefahr eines Abreißens nach längerer Betriebszeit nicht ausgeschlossen werden könnte. Bei einer Ausführung nach dem DE-GM 81 00 709 ist das Anschlußstück über einen radial abstehenden Auslegerarm an einem Rahmen gestellfest montiert. Über den Auslegerarm wird nicht nur eine Verdrehsicherung bewirkt, sondern das Anschlußstück wird außerdem starr an einem ortsfesten Teil fixiert.

Bei derartigen Ausführungen muß wegen der erforderlichen Relativbewegung eine hohen Anforderungen gerecht werdende Dichtung zwischen dem Endstück der Waschflüssigkeitsleitung und dem Anschlußstück vorgesehen werden, die eine toleranzabhängige Exzentrizität und einen unrunden Lauf des Endstückes im Anschlußstück ausgleicht und die auch nach längerer Betriebszeit betriebssicher arbeitet. Dies ist bei den bekannten Ausführungen wegen der starren und formstabilen Fixierung des Anschlußstückes nicht gewährleistet. Nachteilig ist auch der verhältnismäßig hohe Verschleiß der Lagerflächen zwischen dem Endstück und dem Anschlußstück.

Der vorliegenden Erfindung liegt daher die Aufgabe zugrunde, eine solche Scheibenreinigungsanlage mit einfachsten Mitteln so weiterzubilden, daß die Funktion, insbesondere eine einwandfreie Abdichtung und eine spielfreie Lagerung, auch nach einer längeren Betriebszeit gewährleistet ist.

Diese Aufgabe wird erfindungsgemäß mit den kennzeichnenden Merkmalen des Anspruchs 1 gelöst.

Die Erfindung beruht dabei auf der Überlegung, daß bei einer verspannungsfreien Zentrierung des Anschlußstückes gegenüber dem Endstück der Waschflüssigkeitsleitung die im Laufe der Betriebszeit nicht auszuschließende exzentrische Bewegung oder Unwucht der Wischerwelle keinen nachteiligen Einfluß auf die Dichtung zwischen dem Anschlußstück und dem Endstück hat, weil das Anschlußstück diese durch eine Unwucht hervorgerufene Bewegung mitmachen kann. Anstelle der bei den bekannten Ausführungen starren und formstabilen Fixierung an einem ortsfesten Teil wird also erfindungsgemäß eine flexible Aufhängung des Anschlußstückes vorgesehen. Das Anschlußstück ist in einer Ebene quer zur Achsrichtung der Welle allein durch das Endstück gehalten, und gegenüber dem ortsfesten Teil ist ergänzend lediglich eine Sicherung erforderlich, die ausschließlich ein Verdrehen des Anschlußstückes verhindern soll. Bei einer solchen Ausbildung wirken also keine Radialkräfte auf die Lagerstelle, so daß ein vorzeitiger Verschleiß nicht zu befürchten ist.

Vorteilhatte Weiterbildungen der Erfindung zur Ausbildung dieser Verdrehsicherung sind in den Ansprüchen 2 bis 5 gekennzeichnet.

Alle diese Verdrehsicherungen müssen so ausgelegt sein, daß das Anschlußstück radial in jeder Richtung um ein gewisses Maß frei beweglich ist. Wenn also zur Verdrehsicherung beispielsweise ein vom Anschlußstück abstehender gabelartiger Ansatz gehört, zwischen dessen Zinken ein ortsfestes Halteelement eingreift, sollte eine gewisse Schwenkmöglichkeit dieses gabelartigen Ansatzes um das Halteelement möglich sein. Dies kann man sehr einfach dadurch erreichen, daß man dieses Halteelement als Rundstab ausbildet.

In den Ansprüchen 6 bis 14 sind verschiedene Alternativen zur federnden Andrückung des Anschlußstückes an das Endstück der Waschflüssigkeitsleitung dargestellt. Das dazu notwendige Federelement wird bei bevorzugten Ausführungen an dem ortsfesten Element fixiert, das als Teil der Verdrehsicherung ohnehin notwendig ist. Durch die mehrfache Ausnutzung eines Teiles können Herstell- und Montagekosten gering gehalten werden. Wichtig ist dabei auch, daß dieses Federelement so ausgebildet sein muß, daß es eine Radialbewegung des Anschlußstückes zuläßt, so daß dessen verspannungsfreie Zentrierung gegenüber dem Endstück der Waschflüssigkeitsleitung nicht beeinträchtigt wird.

In den Ansprüchen 15 bis 22 sind vorteilhafte Weiterbildungen der Erfindung gekennzeichnet, die sich auf die Abdichtung zwischen den feststehenden Anschlußstück und dem schwenkbaren Endstück der Waschflüssigkeitsleitung beziehen. Dabei ist darauf geachtet, daß die Dichtelemente derart angeordnet sind, daß die Lagerstellen vom Waschwasser getrennt sind und damit gefettet werden können, wie dies später noch erläutert wird.

Die Ansprüche 27 und 28 beziehen sich auf die Integration eines Rückschlagventiles in dem Raum zwischen dem Waschflüssigkeitskanal und dem Anschlußstück. Für eine solche Lösung wird selbständiger Schutz beansprucht, weil eine solche Integration auch dann Kostenvorteile bringt, wenn eine verspannungsfreie Zentrierung des Anschlußstückes an der Welle aus technischen Gründen nicht möglich sein sollte.

Die Grundgedanken der Erfindung können bei Scheibenreinigungsanlagen realisiert werden, bei denen der Antriebsmotor mit dem Getriebe getrennt vom Wischerlager angeordnet ist. Derartige Anlagen werden üblicherweise zur Reinigung der Frontscheiben in Kraftfahrzeugen eingesetzt. Die Grundgedanken der vorliegenden Erfindung können aber auch bei einer Wischeranlage, beispielsweise für Heckscheiben oder Scheinwerfer, bei denen der Wischermotor mit dem Getriebe und der Wischerwelle in einem Gehäuse angeordnet sind, realisiert werden. In diesem Fall muß das Waschwasser durch das Motor- oder Getriebegehäuse eingeleitet und durch die Waschflüssigkeitsleitung im Inneren der Wischerwelle zur Düse gefördert werden.

Auch bei derartigen Wischeranlage soll das Anschlußstück verspannungsfrei gegenüber dem Endstück der Waschflüssigkeitsleitung zentriert werden, damit ein zu hoher Verschleiß vermieden wird. Bei einer bevorzugten Ausführung soll das Endstück der Waschflüssigkeitsleitung durch eine Bohrung des Getriebegehäusedeckels hindurchragen, wobei dann das Anschlußstück auf der dem Getriebe abgewandten Außenseite des Deckels quer zur Waschflüssigkeitsleitung verschiebbar befestigt wird. Bei solchen Ausführungen ist eine einwandfreie Zentrierung des Getriebegehäusedeckels relativ zur Wischerwelle nicht erforderlich, und eine solche Lösung hat zusätzlich den Vorteil, daß das Anschlußstück mit den darin gelegenen Dichtungen im Störungsfall leicht ausgewechselt werden kann. Durch die Merkmale der Ansprüche 29 bis 31 sind vorteilhafte Weiterbildungen der Erfindung gekennzeichnet, die sich auf eine montagegünstige Abdichtung der Bohrung beziehen, die in dem Getriebegehäusedeckel zum Durchtritt für das Endstück der Waschflüssigkeitsleitung vorgesehen ist. Die dazu vorgesehene Halteplatte hat gemäß einer vorteilhaften Weiterbildung eine Buchse, die zugleich als Lagerbuchse für die Wischerwelle dient. Der Sachverhalt kann damit auch so ausgedrückt werden, daß das Anschlußstück gewissermaßen zweiteilig ausgebildet ist, wobei der Getriebegehäusedeckel zwischen beiden Teilen eingespannt ist, sobald diese miteinander verrastet sind. Mit den Merkmalen des Anspruchs 34 wird eine besonders stabile Verrastung der beiden Teilstücke des Anschlußstückes erreicht, so daß auch beim Aufstecken des Schlauches auf einen Rohrstutzen an dem Anschlußstück ein unbeabsichtigtes Lösen dieses Anschlußstückes vom Getriebegehäusedeckel nicht zu befürchten ist.

Die Ansprüche 36 bis 38 beziehen sich auf besondere Merkmale bezüglich der Abdichtung zwischen dem Anschlußstück und dem Endstück des Waschflüssigkeitskanales, die eine lange Lebensdauer gewährleisten.

Die Erfindung und deren vorteilhatte Weiterbildungen werden nachstehend anhand der in der Zeichnung dargestellten Ausführungsbeispiele näher erläutert. Es zeigen:
- Fig. 1: in schematischer Darstellung einen Schnitt durch eine Wischerwelle mit einem Anschlußstück,
- Fig. 2: einen Teilschnitt entlang der Linie II,
- Fig. 3: einen Teilschnitt eines anderen Ausführungsbeispieles,
- Fig. 4: einen Teilschnitt entlang der Schnittlinie IV,
- Fig. 5: einen Teilschnitt eines weiteren Ausführungsbeispieles,
- Fig. 6: einen Teilschnitt eines weiteren Ausführungsbeispieles,
- Fig. 7: eine Ansicht in Pfeilrichtung P auf das Ausführungsbeispiel nach Fig.6
- Fig. 8: einen Teilschnitt durch ein weiteres Ausführungsbeispiel,
- Fig. 9: eine Ansicht auf ein weiteres Ausführungsbeispiel,
- Fig. 10: eine Seitenansicht der Ausführung nach Fig. 9.
- Fig. 11: einen Schnitt durch ein weiteres Ausführungsbeispiel,
- Fig. 12: einen Schnitt durch ein Ausführungsbeispiel einer aus einem Getriebegehäuse herausragenden Wischerwelle,
- Fig. 13: eine Ansicht auf den Getriebegehäusedeckel,
- Fig. 14: in vergrößertem Maßstab einen Schnitt durch ein Anschlußstück,
- Fig. 15: einen Schnitt durch eine Halteplatte für das Anschlußstück,
- Fig. 16: eine Ansicht in Pfeilrichtung P auf diese Halteplatte,
- Fig. 17: einen Haltezapfen dieser Halteplatte,
- Fig. 18: einen Schnitt durch das Anschlußstück,
- Fig. 19: eine Ansicht in Pfeilrichtung P1 und
- Fig. 20: einen Teilschnitt entlang der Schnittlinie XX in Fig. 19.

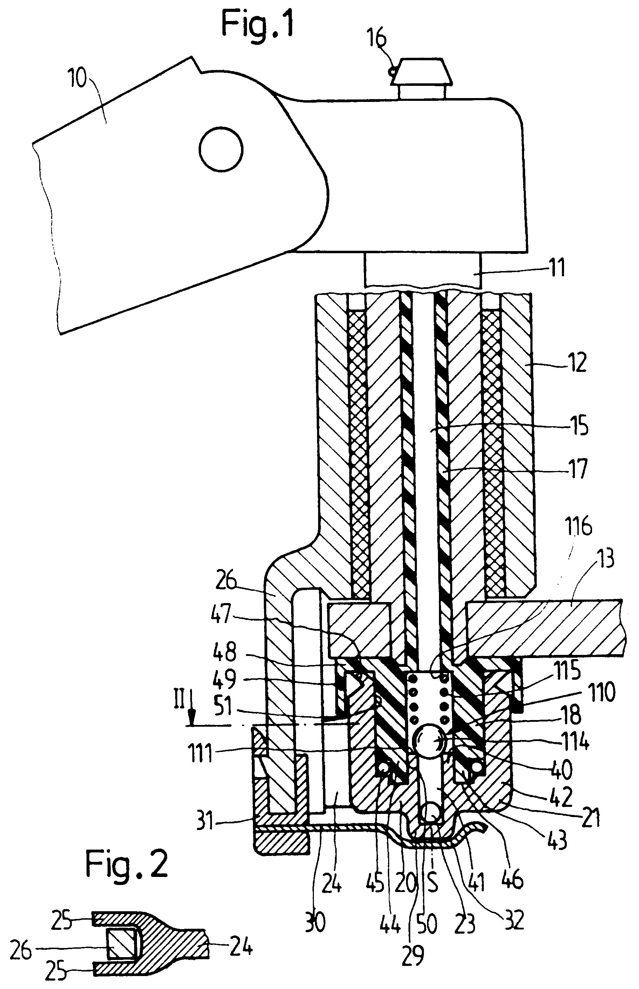

Zu einer Scheibenreinigungsanlage eines Kraftfahrzeuges gehört üblicherweise ein Wischhebel, von dem in Fig. 1 lediglich der Wischarm 10 angedeutet ist. Dieser Wischarm ist am Ende einer Wischerwelle 11 befestigt, die in einer Lagerbuchse 12 drehbar gelagert ist. Die Wischerwelle wird über ein geeignetes Getriebe, zu dem eine Schwinge 13 gehört, die am antriebsseitigen Ende an der Wischerwelle 11 drehfest fixiert ist, pendelnd angetrieben. Derartige Konstruktionen sind hinlänglich bekannt und weitere Erläuterungen dürften sich daher erübrigen.

Zu den Scheibenreinigungsanlagen moderner Kraftfahrzeuge gehört üblicherweise auch eine Waschanlage, über die Waschflüssigkeit auf die zu reinigende Scheibe gespritzt wird. Bei der vorliegenden Erfindung wird diese Waschflüssigkeit durch eine axiale Bohrung in der Wischerwelle zu einer Düse 16 gefördert. Dabei dient also als Waschflüssigkeitsleitung entweder direkt die axiale Bohrung 15 in der Wischerwelle 11 oder ein Rohrstuck 17, das in diese Bohrung 15 eingesteckt, gegebenenfalls auch direkt eingespritzt ist. Dabei ist auf das eine Ende dieses Rohrstückes 17 die Düse 16 aufgesteckt, was normalerweise keine Probleme bereitet, weil an dieser Stelle keine Relativbewegung zwischen den zwei zu verbindenden Teilen, also der Düse 16 und dem Rohrstück 17, stattfindet. Am anderen Ende taucht ein Endstück 18 dieses als Waschflüssigkeitsleitung anzusehenden Rohrstückes 17 axial in ein insgesamt mit 20 bezeichnetes Anschlußstück hinein, das gegen Verdrehung gesichert ist. Hier findet also eine Relativbewegung zwischen dem Endstück 18 der Waschflüssigkeitsleitung 17 und diesem Anschlußstück 20 statt, und es muß daher besonders auf eine auch nach einer längeren Betriebszeit noch einwandfreie Abdichtung an dieser Stelle geachtet werden.

Das Anschlußstück 20 ist insgesamt topfförmig ausgebildet und hat einen am Boden 21 angeordneten, radial abstehenden Anschlußstutzen 22 mit einem Zufuhrkanal 23 für die Waschflüssigkeit. Von dem Anschlußstück 20 steht außerdem radial ein gabelartiger Ansatz 24 mit zwei Zinken 25 am Ende ab, die ein insgesamt mit 26 bezeichnetes Halteelement umgreifen, das einstückig axial von der Lagerbuchse 12 absteht. Das Anschlußstück 20 ist axial auf das Endstück 18 der Waschflüssigkeitsleitung 17 aufgesteckt, wobei ein als Blattfeder 30 ausgebildetes Federelement dieses Anschlußstück 20 in axialer Richtung sichert. Bei dem Ausführungsbeispiel nach Fig. 1 ist diese Blattfeder über eine Klammer 31 direkt an dem ortsfesten Halteelement 26 festgelegt und greift zentrisch am Boden 21 des Anschlußstückes 20 an.

Insgesamt kann daher zu Fig. 1 festgestellt werden, daß das Anschlußstück 20 verspannungsfrei unmittelbar am Endstück 18 der Waschflüssigkeitsleitung 17 zentriert ist. Dieses Anschlußstück kann nämlich beispielsweise bei einer Unwucht in der Wischerwelle in allen Richtungen in einer Ebene quer zur Wischerwelle wenigstens in einem bestimmten Maße diese Taumelbewegung der Wischerwelle mitmachen. Dies liegt daran, daß dieses Anschlußstück 20 nicht starr an einem ortsfesten Teil fixiert ist, sondern daß die Haltemittel gewissermaßen flexibel ausgebildet sind. Die zur Verdrehsicherung dienenden Elemente, nämlich der gabelartige Ansatz 24 mit den Zinken 25 sowie das Halteelement 26 lassen nämlich einen Ausgleich von denkbaren Toleranzen in einer Richtung radial zur Symmetrieachse S von Wischerwelle und Anschlußstück 20 zu. Auf diese Weise ist eine weitgehend verschleißfreie Verbindung zwischen dem verdrehsicher gehaltenen Anschlußstück 20 und dem sich drehenden Endstück 18 der Waschflüssigkeitsleitung 17 geschaffen.

Bei der Ausführung nach Fig. 1 geht vom Boden 21 des topfförmigen Anschlußstückes 20 zentrisch ein zylindrischer Ansatz 40 aus, der eine Bohrung 41 als Waschflüssigkeitskanal aufweist. Zwischen diesem zylindrischen Ansatz 40 und der Seitenwand 42 ist ein Ringraum 43 gebildet, in den ein axial vom Endstück 18 der Waschflüssigkeitsleitung 17 abstehender Ringflansch 44 passend eingreift. Zwischen diesem Ringflansch 44 und der Seitenwand 42 ist eine Radialdichtung mittels eines O-Ringes 45 realisiert. Die Stirnfläche 46 an diesem Ringflansch 44 dient dabei als Abstützfläche, an der das Anschlußstück 20 aufgrund der Federwirkung des Federelementes 30 dichtend anliegt. Bei der Ausführung nach Fig. 1 steht von der Stirnfläche des Anschlußstückes 20 eine Dichtlippe 47 axial ab, die an einem Radialflansch 48 am Endstück 18 der Waschflüssigkeitsleitung 17 dichtend anliegt. Von diesem Radialflansch 48 geht axial ein Ringflansch 49 aus, der kragenartig die Dichtlippe 47 übergreift.

Aus Fig. 1 ist erkennbar, daß zwischen dem ortsfesten Anschlußstück 20 und dem Endstück 18 der Waschflüssigkeitsleitung 17 mehrere Abdichtflächen gebildet sind. Eine erste Dichtfläche ist geschaffen zwischen dem Boden des Anschlußstückes 20 und der Abstutzfläche 46 am Endstück 18 der Waschflüssigkeitsleitung. Eine zweite Abdichtung wird über den O-Ring 45 relaisiert. Eine Abdichtung erfolgt natürlich auch im Bereich der Lagerflächen 50 und 51 zwischen dem Endstück 18 der Waschflüssigkeitsleitung 17 und dem Anschlußstuck 20. Schließlich erfolgt eine Abdichtung durch die Dichtlippe 47 am Radialflansch 48. Auf diese Weise wird sichergestellt, daß auch bei einem hohen Förderdruck keine Waschflüssigkeit an der Verbindungsstelle zwischen dem Anschlußstück 20 und dem Waschflüssigkeitskanal 17 in der Wischerwelle 11 austritt. Dabei ist beachtet, daß die eingefetteten Lagerflächen 51 einerseits durch den Dichtring 45 gegenüber der Waschflüssigkeit und andererseits durch die Dichtlippe 47 auch gegenüber Schmutzwasser abgedichtet ist.

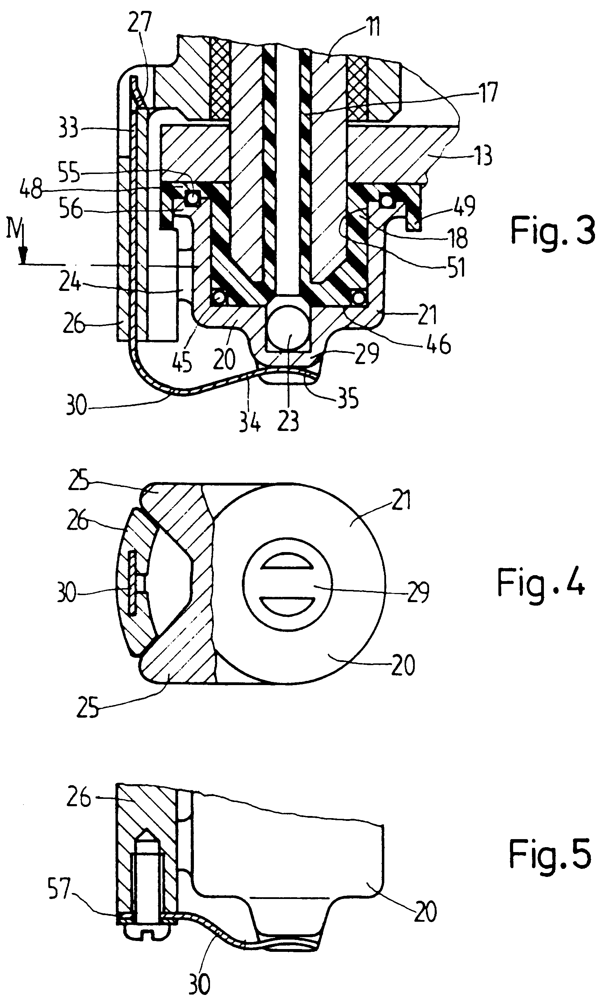

Das Ausführungsbeispiel gemäß den Fig. 3 und 4 unterscheidet sich hinsichtlich der Ausbildung der Verdrehsicherung mittels eines gabelförmigen Ansatzes 24 und einem Halteelement 26 nicht vom Ausführungsbeispiel nach Fig.1 und 2. Bei dieser Ausführung nach Fig. 3 ist jedoch das Federelement 30 als winklig abgebogene Blattfeder ausgebildet, deren einer Schenke 33 in einem parallel zur Wischerweile 11 verlaufenden Schlitz 27 in dem ortsfesten Halteelement 26 steckt und dort verrastet ist. Der andere Schenkel 34 greift wiederum im wesentlichen zentrisch am Boden 21 des Anschlußstückes 20 an, wobei wiederum darauf geachtet ist, daß dieses Federelement 30 eine Bewegung des Anschlußstückes 20 in einer Ebene quer zur Wischerwelle nicht beeinträchtigt. Dazu hat dieses Federelement 30 am Ende eine ballige Erhebung 35, die mit einem ebenfalls ballig ausgebildeten Ansatz 29 am Anschlußstück 20 derart zusammenwirkt, daß eine im wesentlichen nur punktförmige Anlage gegeben ist. Bei der Ausführung nach Fig. 1 greift dagegen dieser Ansatz 29 in eine ballige Einbuchtung 32 am Endbereich des Federelementes 30 ein, die natürlich so ausgelegt werden muß, daß eine Relativbewegung möglich ist. Bei der Ausführung nach Fig. 3 ragt der Endabschnitt der Wischerwelle 11 in das topfförmige Anschlußstück 20 hinein, was die Stabilität der Anordnung erhöht. Der Sachverhalt kann auch so ausgedrückt werden, daß das Endstück 18 des Rohrstückes 17 den Endbereich der Wischerwelle 11 topfartig umgibt, wobei eine Lagerfläche 50 nur zwischen diesem Endstück 18 und dem Anschlußstück 20 gebildet ist. Da das Endstück 18 des Waschflüssigkeitskanales 17 und dieses Anschlußstück 20 aus Kunststoff hergestellt sind, ist eine verschleißfreie Lagerpaarung durch Auswahl entsprechender Werkstoffe möglich. Im übrigen unterscheidet sich das Ausführungsbeispiel nach Fig. 3 von der Ausführung nach Fig. 1 noch dadurch, daß nun ein weiterer O-Ring 55 vorgesehen ist, der als Dichtung zwischen dem Radialflansch 48 am Endstück 18 der Waschflüssigkeitsleitung 17 und einem Radialflansch 56 am Anschlußstück 20 wirkt. Die beiden durch die O-Ringe 45, 55 gebildeten Dichtungen liegen in axialem Abstand voneinander entfernt, wobei zwischen diesen beiden Dichtungen eine Lagerfläche 51 zwischen dem Endstück 18 der Waschflussigkeitsleitung 17 und dem Anschlußstück 20 vorhanden ist, die gefettet werden kann, denn ein Auslaufen dieses Fettes bzw. eine Berührung dieses Fettes mit der Waschflüssigkeit ist ausgeschlossen.

Fig. 5 unterscheidet sich von dem Ausführungsbeispiel nach Fig. 3 lediglich durch eine andere Anordnung des Federelementes 30, das wiederum als Blattfeder ausgebildet ist und um eine Achse parallel zur Wischerwlle schwenkbar an der Stirnfläche 57 des Ansatzes oder Halteelementes 26 fixiert, im gezeigten Ausführungsbeispiel verschraubt ist.

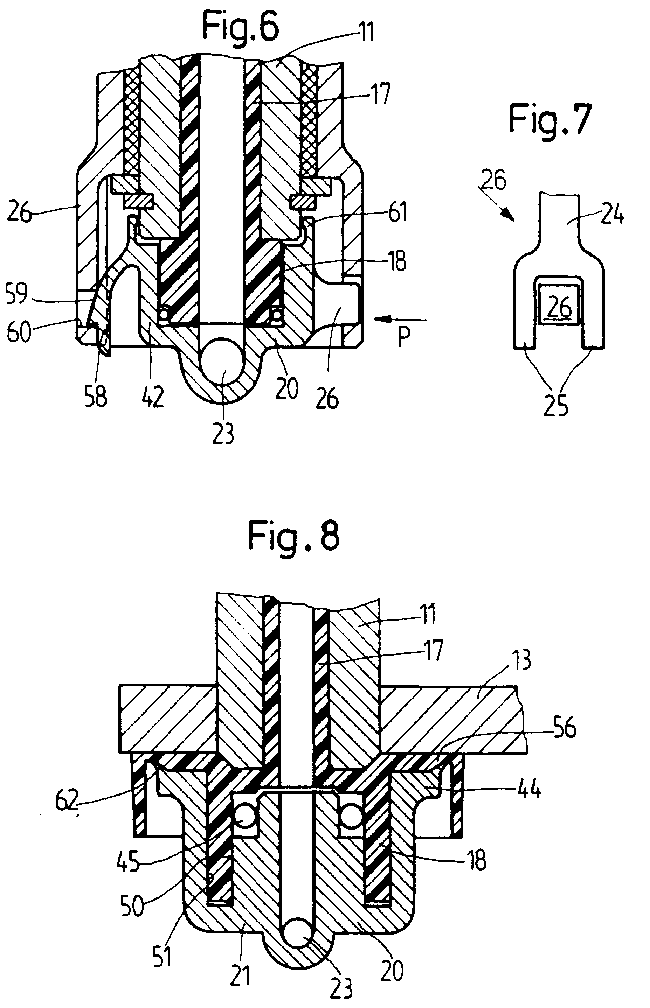

Bei dem Ausführungsbeispiel nach den Fig. 6 und 7 sind an das Anschlußstück 20 mehrere in radialer Richtung federnde Lappen 58 angeformt, von denen in der Zeichnung nur einer ersichtlich ist. Über diesen Lappen 58 ist das Anschlußstück in axialer Richtung an dem ortsfesten Ansatz 26 abgestützt. Dazu hat dieser Lappen 58 eine Rastnase 59, die beim Aufstecken des Anschlußstückes 20 auf das Endstück 18 der Waschflüssigkeitsleitung 17 hinter einen Anschlag 60 einer Aussparung einrastet. Damit kann ein zusätzliches Federelement in Form einer Blattfeder entfallen. Über diesen Lappen 58 kann zugleich die Verdrehsicherung gebildet werden, doch kann man auch zusätzliche Halteelemente vorsehen, die zwischen die Zinken 25 eines in axialer Richtung von der Lagerbuchse 12 abstehenden Ansatzes 26 greifen. Bei dieser Ausführung ist im übrigen die Schwinge 13 nahe dem abtriebsseitigen Ende der Wischerwelle an dieser fixiert, so daß dieser Ansatz 26 am antriebsseitigen Ende als umlaufender Kragen ausgebildet sein kann, der folglich das Anschlußstück 20 in radialer Richtung gegen äußere Einflüsse schützt. Im übrigen wird zur Ausführung nach Fig. 6 noch darauf hingewiesen, daß nunmehr das Anschlußstück 20 eine von deren Stirnfläche ausgehende Dichtlippe 61 aufweist, die unmittelbar am Endbereich der Wischerwelle 11 und nicht am Endstück 18 des Waschflüssigkeitskanales 17 anliegt. Während bei den bisherigen Ausführungen also das Anschlußstück ausschließlich mit dem Endstück des Waschflüssigkeitskanales in Berührung steht, ist nun bei der Ausführung nach Fig. 6 ein Kontakt zwischen diesem Anschlußstück 20 und der Wischerwelle 11 direkt gegeben. Bei diesem Ausführungsbeispiel ist also die Seitenwand 42 des Anschlußstückes 20 gewissermaßen über das Endstück 18 und einen Teilbereich der Wischerwelle 11 gestülpt.

Fig. 8 zeigt ein Ausführungsbeispiel mit einer anderen Ausbildung der einzelnen Dichtungen. Der O-Ring 45 ist nun nicht in der Nähe des Bodens 21 des Anschlußstückes 20, sondern nahe dem Ende der Wischerwelle 11 angeordnet. Als axiale Anlauffläche dient bei dieser Ausführung einerseits der Radialflansch 56 und andererseits der Ringflansch 44 am Anschlußstück 20. Anstelle des O-Ringes 55 bei der Ausführung nach Fig. 3 ist jetzt aber eine axial abstehende Dichtlippe 62 vorgesehen. Wiederum sind die beiden Abdichtungen über den O-Ring 45 und diese Dichtlippe 62 im Abstand voneinander angeordnet, so daß dazwischen gefettete Lagerflächen 50, 51 gebildet werden. Dabei ist bewußt darauf geachtet, daß der Durchmesser des O-Ringes 45 verhältnismäßig klein ist, damit die darauf einwirkende Axialkraft durch den Druck der über den Zufuhrkanal 23 einströmenden Waschflüssigkeit klein bleibt.

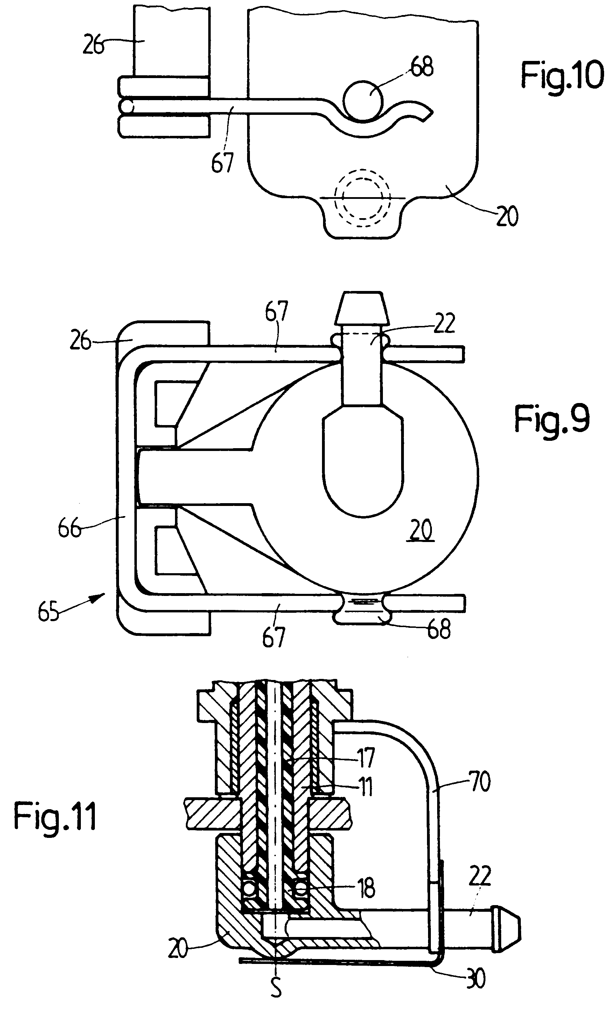

Bei dem Ausführungsbeispiel gemäß den Fig. 9 und 10 wird anstelle einer Blattfeder ein im wesentlichen U-förmiger Drahtbügel 65 als Federelement verwendet. Dieser Drahtbügel 65, dessen Steg 66 an dem ortsfesten Ansatz 26 fixiert ist, greift mit seinen freien Schenkeln 67 an diametral gegenüberliegenden Haltezapfen 68 an der Mantelfläche des Anschlußstückes 20 an. Ein solches Federelement kann kostengünstig hergestellt und montiert werden.

Bei dem Ausführungsbeispiel nach Fig. 11 greift ein als Verdrehsicherung dienender Haltebügel 70 an dem Anschlußstutzen 22 des Anschlußstückes 20 an, also in einem verhältnismäßig großen Abstand von der Symmetrieachse S. Als Federelement zur axialen Abstützung des Anschlußstückes 20 dient wiederum eine Blattfeder 30, die nun an diesem Haltebügel 70 fixiert ist. Im übrigen zeigt dieses Ausführungsbeispiel erneut, daß das Anschlußstück 20 über das Endstück 18 des Waschflüssigkeitskanales 17 und zusätzlich über den Endbereich der Wischerwelle 11 unmittelbar gestülpt ist.

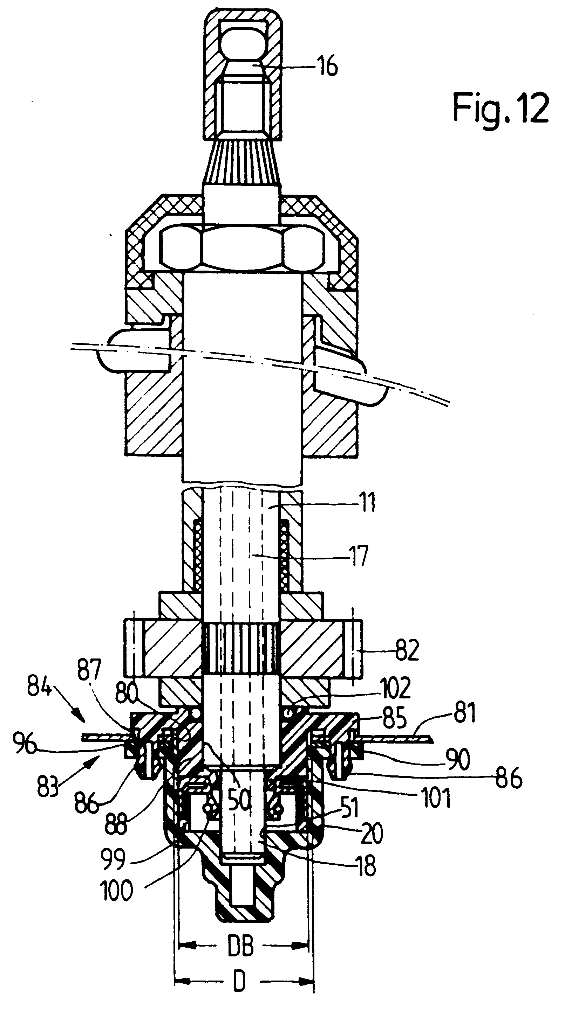

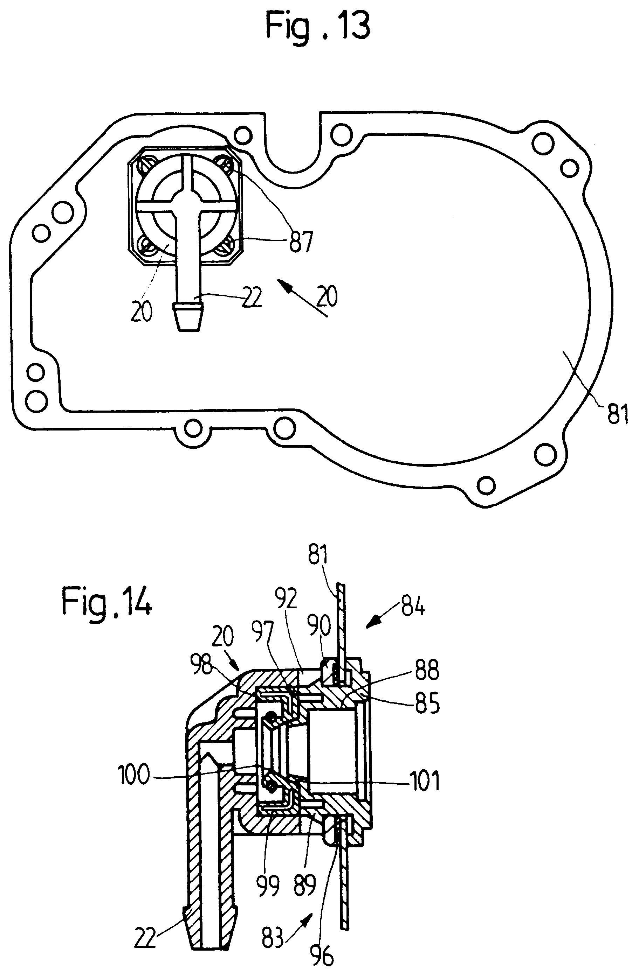

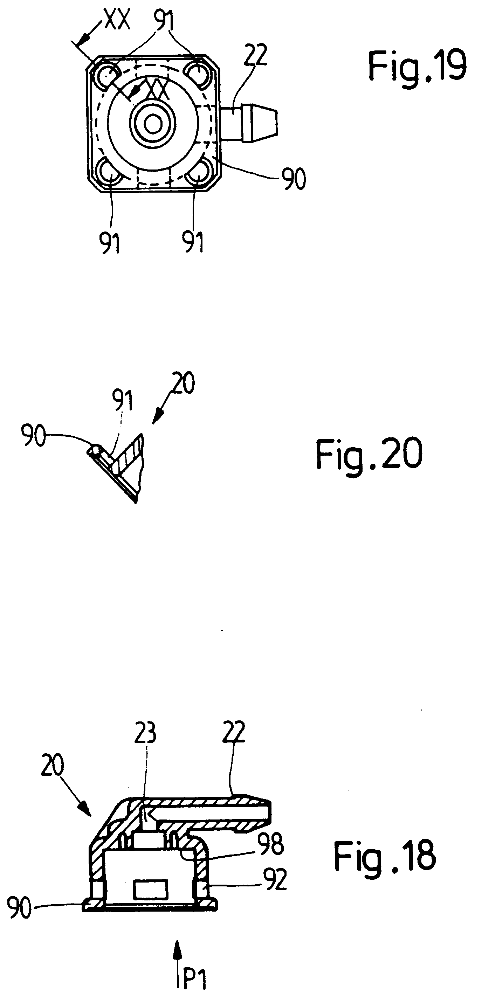

Die bisher gezeigten Ausführungsbeipiele beziehen sich auf Scheibenreinigungsanlagen, bei denen die Wischerwelle unbhängig vom Antriebsmotor bzw. dessen Getriebe in einem Kraftfahrzeug montiert wird. In den Fig. 12 bis 20 ist nun ein Ausführungsbeispiel dargestellt, bei dem das Endstück 18 der Waschflüssigkeitsleitung 17 durch eine Bohrung 80 in einem Getriebegehäusedeckel 81 hindurchragt, wobei das Anschlußstück 20 auf der dem Getriebe, von dem ein mit der Wischerwelle 11 drehfest verbundenes Zahnrad 82 ersichtlich ist, abgewandten Außenseite 83 angeordnet ist. Bei einer solchen Ausführung muß nicht nur darauf geachtet werden, daß zwischen der Wischerwelle 11 bzw. dem Endstück 18 des Waschflüssigkeitskanales 17 eine einwandfreie Abdichtung gegeben ist, sondern es muß auch eine solche Konstruktion gewählt werden, daß das Getriebe, also das Zahnrad 82, gegen äußere Einflüsse geschützt ist. Insbesondere muß man auch verhindern, daß eventuelles Fett aus dem Getriebegehäuse nach außen abfließen kann, weil sonst die Funktionsfähigkeit der Scheibenreinigungsanlage beeinträchtigt wird. Das bedeutet also, daß die Bohrung 80 im Getriebegehäusedeckel 81 abgedichtet werden muß, wobei natürlich im Sinne der vorliegenden Erfindung eine Konstruktion zu wählen ist, die eine verspannungsfreie Zentrierung des Anschlußstückes 20 auf der Wischerwelle 11 bzw. dem Endstück 18 des Waschflüssigkeitskanales 17 nicht behindert.

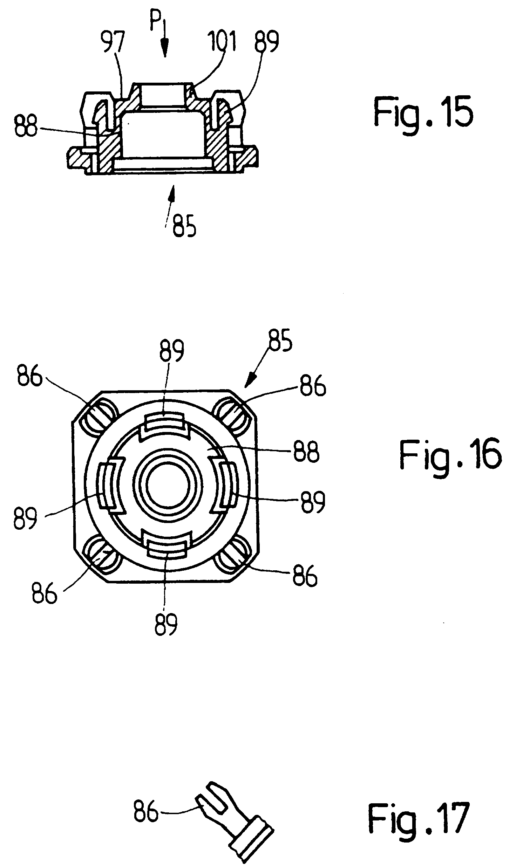

Auf der Innenseite 84 des Getriebegehäusedeckels 81 ist eine im wesentlichen quadratische Halteplatte 85 angeordnet, die senkrecht abstehende Haltezapfen 86 aufweist, die durch entsprechende Durchbrüche 87 im Getriebegehäusedeckel 81 hindurchragen. Diese Haltezapfen 86 dienen als Befestigungsmittel für das Anschlußstück 20, was später noch erläutert wird. Von der Halteplatte 85 steht außerdem zentrisch eine Buchse 88 ab, die die Bohrung 80 in dem Getriebegehäusedeckel 81 durchsetzt. Wichtig ist dabei, daß der Durchmesser DB dieser Buchse kleiner ist als der Durchmesser D der Bohrung 80, so daß die Halteplatte 85 quer zur Waschflüssigkeitsleitung verschiebbar ist. Dazu müssen natürlich auch die Durchbrüche 87 größer sein als der Querschnitt der Haltezapfen 86 in dem Bereich, so daß also auch diese Haltezapfen 86 mit seitlichem Spiel durch diese Durchbrüche 87 hindurchragen. Insbesondere aus Fig. 15 und 16 geht hervor, daß von der Außenseite dieser Buchse 88 Rasthaken 89 abstehen, die ebenfalls als Befestigungsmittel für das Anschlußstück 20 dienen. Insgesamt sind vier derartige Rasthaken 89 vorgesehen, die gleichmäßig über den Umfang der Buchse verteilt sind.

Das Anschlußstück 20 hat eine Ringflansch 90 mit Aufnahmelöchern 91 für die Haltezapfen 86. In der Seitenwand des Anschlußstückes 20 sind gleichmäßig am Umfang verteilt vier Aussparungen 92 vorgesehen, die mit den Rasthaken 89 an der Halteplatte 85 zusammenwirken.

Die Baueinheit aus Getriebe und Wischerwelle wird wie folgt montiert. Zunächst wird die Halteplatte 85 am Getriebegehäusedeckel 81 vormontiert, wobei die Haltezapfen 86 durch die Durchbrüche 87 hindurchgreifen und mit ihren dann wieder auseinanderspreizenden Rastzungen die Halteplatte 85 am Getriebegehäusedeckel 81 halten. Auf die Außenseite 83 des Getriebegehäusedeckels wird dann eine Dichtung 96 aufgelegt. Dann wird das Anschlußstück 20 aufgesetzt, wobei die Haltezapfen 86 dann in die Aufnahmelöcher 91 eingreifen und die Rasthaken 89 in die Aussparungen 92 einrasten. Durch diese Befestigungsmittel, also die Rasthaken 89 und die Aussparungen 92 bzw. die Haltezapfen 86 und die Durchbrüche 87, wird das auf der Außenseite 83 angeordnete Anschlußstück 20 mit der auf der Innenseite 84 angeordneten Halteplatte 85 derart verrastet, daß die Teile unter Zwischenlage des Dichtringes 96 mit geringer Spannung am Getriebegehäusedeckel von gegenüberliegenden Seiten her anliegen. Durch geeignete Dimensionierung der Befestigungselemente kann man erreichen, daß die Bohrung 80 und die Durchbrüche 87 im Getriebegehäusedeckel 81 ausreichend abgedichtet sind, daß aber dennoch die Beweglichkeit von Halteplate 85 und Anschlußstück 20 in einer Ebene quer zur Wischerwelle bzw. parallel zum Getriebegehäusedeckel 81 nicht beeinträchtigt wird. Auch bei dieser Ausführung ist also das Anschlußstück verspannungsfrei gegenüber dem Endstück 18 der Waschflüssigkeitsleitung 17 zentriert. Eine Verdrehsicherung, die einen Ausgleich von Toleranzen in radialer Richtung zuläßt, wird durch das Zusammenwirken von Haltezapfen 86 und Durchbruch 87 realisiert.

Im übrigen wird zu dieser Ausführung noch darauf hingewiesen, daß die Buchse 88 an der Halteplatte 85 direkt als Lagerbuchse für die Wischerwelle 11 dient. Das bedeutet also, daß auch die Halteplatte 85 verspannungsfrei zentriert an der Wischerwelle 11 bzw. dem Endstück 18 des Waschflüssigkeitskanals 17 gelagert ist. Insbesondere aus Fig. 14 geht hervor, daß diese Lagerbuchse 88 in die topfartige Aufnahme am Anschlußstück 20 hineinragt, wobei zwischen der Stirnfläche 97 dieser Lagerbuchse 88 und einem Ansatz 98 am Anschlußstück 20 ein axial wirkendes Dichtelement 99 vorgesehen ist, das eine Dichtlippe 100 aufweist, die radial am Enstück 18 der Waschflüssigkeitsleitung 17 anliegt. Von der Stirnfläche 97 der Buchse 88 steht ein Kragen 101 ab, der diese Dichtlippe 100 unterstützt, so daß auch bei hohen Betriebsdrücken eine einwandfreie Dichtwirkung erreicht wird.

Aus Fig. 12 wird deutlich, daß zwei Lagerflächen 50, 51 vorhanden sind, wobei eine Lagerfläche 50 mit der Wischerwelle 11 und eine Lagenfläche 51 mit dem Endstück 18 der Waschflüssigkeitsleitung 17 zusammenwirkt. Insgesamt kann diese Konstruktion auch in der Weise beschrieben werden, daß das Anschlußstück 20 zweiteilig ausgebildet ist, wobei die beiden Teile 85, 20 zwischen sich den Getriebegehäusedeckel 81 aufnehmen und drehfest und verschiebefest miteinander verrastet sind. An beiden Teile befinden sich Lagerflächen, wobei eine Lagerfläche mit der Wischerwelle und eine Lagerfläche mit dem Waschflüssigkeitskanal zentriert ist.

Insbesondere aus Fig. 12 geht noch hervor, daß auch über einen O-Ring 102 eine zusätzliche Abdichtung zwischen der Halteplatte 85 und der Wischerwelle 11 möglich ist, wodurch ein Auslaufen des Getriebefettes verhindert wird.

In Fig. 1 ist im übrigen noch angedeutet, daß in das Anschlußstück 20 ein Rückschlagventil 110 integriert werden kann. Auf einer Stirnfläche 111 des zentrisch vom Boden 21 des Anschlußstückes 20 abstehenden und mit einer Axialbohrung 41 versehenen Ansatzes 40 ist ein Ventilsitz für ein Ventilschließglied in Form einer Kugel 114 ausgebildet. Eine Ventilschließfeder 115 stützt sich zentrisch an einer Ringschulter 116 am Rohrstück 17 ab und drückt das Ventilschließglied 114 auf seinen Ventilsitz.

Durch dieses Rückschlagventil wird in an sich bekannter Weise ein Leerlaufen der Waschflüssigkeitsleitung verhindert.

Abschließend wird nochmals darauf hingewiesen, daß mit den Merkmalen der vorliegenden Erfindung eine verschleißarme Verbindung zwischen dem sich drehenden Endstück der Wischerwelle und dem drehfesten Anschlußstück geschaffen ist, die eine lange Lebensdauer erreicht.

## Patentansprüche

1. Scheibenreinigungsanlage, insbesondere für Kraftfahrzeuge, mit einer in einer Lagerbuchse (12) drehbar gelagerten Welle (11) zum Antrieb eines Wischhebels, die eine axiale Bohrung (15) zur Aufnahme und/oder Bildung einer Waschflüssigkeitsleitung (17) aufweist, welche während des Betriebes der Scheibenreinigungsanlage mit der Welle (11) pendelt, wobei das Endstück (18) der Waschflüssigkeitsleitung (17) am antriebsseitigen Ende der Welle (11) axial in ein topfförmiges, gegenüber der ortsfesten Lagerbuchse (12) durch eine Verdrehsicherung (24, 25, 26) gesichertes Anschlußstück (20) für einen Waschflüssigkeitszufuhrschlauch hineinragt und Mittel zur axialen Sicherung des Anschlußstückes (20) gegenüber dem Endstück (18) vorgesehen sind und eine Dichtung zwischen dem Endstück (18) der Waschflüssigkeitsleitung (17) und dem Anschlußstück (20) vorgesehen ist, dadurch gekennzeichnet, daß das Anschlußstück (20) in Richtung quer zur Achsrichtung der Welle (11) allein durch das Endstück (18) gehalten ist und daß die Verdrehsicherung (24, 25, 26) einen Ausgleich von Toleranzen in radialer Richtung zuläßt.

2. Scheibenreinigungsanlage nach Anspruch 1, dadurch gekennzeichnet, daß zur Verdrehsicherung ein im wesentlichen radial vom Anschlußstück (20) abstehender gabelartiger Ansatz (24) gehört, zwischen dessen Zinken (25) ein ortsfestes, vorzugsweise axial von der Lagerbuchse (12) abstehendes Halteelement (26) passend eingreift.

3. Scheibenreinigungsanlage nach Anspruch 1, dadurch gekennzeichnet, daß zur Verdrehsicherung ein im wesentlichen radial vom Anschlußstück (20) abstehendes Halteelement (26) gehört, das passend zwischen die Zinken (25) eines ortsfesten, vorzugsweise axial von der Lagerbuchse (12) abstehenden gabelartigen Ansatzes (24) eingreift.

4. Scheibenreinigungsanlage nach Anspruch 1, dadurch gekennzeichnet, daß zur Verdrehsicherung ein im wesentlichen radial vom Anschlußstück (20) abstehendes Haltelement mit wenigstens einem in radialer Richtung federnden Lappen (58) gehört, wobei dieser Lappen (58) mit einem ortsfesten Ansatz (26) verrastet ist.

5. Scheibenreinigungsanlage nach Anspruch 4, dadurch gekennzeichnet, daß am Lappen (58) radial eine Rastnase (59) absteht, die beim Aufstecken des Anschlußstuckes (20) auf das Endstück (18) der Waschflüssigkeitsleitung (17) hinter einen Anschlag (60) am ortsfesten Ansatz (26), insbesondere in eine Rastaussparung einrastet.

6. Scheibenreinigungsanlage nach wenigstens einem der vorhergehenden Ansprüche, dadurch gekennzeichnet, daß das Anschlußstück (20) über ein in Axialrichtung wirkendes Federelement (30, 65) gegen eine Abstützfläche (46) an dem Endstück (18) der Waschflüssigkeitsleitung (17) angedrückt ist.

7. Scheibenreinigungsanlage nach Anspruch 6, dadurch gekennzeichnet, daß das Federelement (30) radial von einem ortsfesten Teil, vorzugsweise von dem der Verdrehsicherung dienenden ortsfesten Ansatz bzw. Halteelement (26), absteht und vorzugsweise zentrisch am Anschlußstück (20) angreift.

8. Scheibenreinigungsanlage nach Anspruch 6 oder 7, dadurch gekennzeichnet, daß das Federelement (30) radial in einen Aufnahmeschlitz eines U-förmigen Bügels (31) eingesteckt und dort verrastet ist und daß dieser Bügel (31) selbst über den freien Endbereich eines ortsfesten Ansatzes (26) gesteckt und mit diesem verrastet ist.

9. Scheibenreinigungsanlage nach Anspruch 6 oder 7, dadurch gekennzeichnet, daß das Federelement (30) um eine Achse parallel zur Wischerwelle (11) schwenkbar an der Stirnfläche (57) eines ortsfesten Ansatzes (26) fixiert, vorzugsweise verschraubt ist.

10. Scheibenreinigungsanlage nach den Ansprüchen 6 bis 9, dadurch gekennzeichnet, daß das Federelement als Blattfeder (30) oder als Drahtbügel (65) ausgebildet ist.

11. Scheibenreinigungsanlage nach Anspruch 6 oder 7, dadurch gekennzeichnet, daß das Federelement als winklig abgebogene Blattfeder (30) ausgebildet ist, dessen einer Schenkel (33) in einem parallel zur Wischerwelle (11) verlaufenden Schlitz (27) in einer ortsfesten Ansatz (26) eingesteckt und dort verrastet ist.

12. Scheibenreinigungsanlage nach wenigstens einem der Ansprüche 6 bis 11, dadurch gekennzeichnet, daß die Blattfeder (30) nahe ihrem freien Ende eine Rasteinbuchtung (32) oder Rasterhebung (35) aufweist und mit einem zugehörig ausgebildeten zentrisch an Boden des Anschlußstückes (20) angeordneten Ansatz (29) zusammenwirkt.

13. Scheibenreinigungsanlage nach Anspruch 6 oder 7, dadurch gekennzeichnet, daß das Federelement ein U-förmiger Drahtbügel (65) ist, dessen Steg (66) an einem ortsfesten Ansatz (26) fixiert ist und dessen freie Schenkel (67) an diametral gegenüberliegenden Haltezapfen (68) an der Mantelfläche des Anschlußstückes (20) anliegen.

14. Scheibenreinigungsanlage nach wenigstens einem der Ansprüche 6 bis 13, dadurch gekennzeichnet, daß auch das Federelement (30,65) eine Radialbewegung des Anschlußstückes (20) in gewissem Umfang zuläßt.

15. Scheibenreinigungsanlage nach wenigstens einem der vorhergehenden Ansprüche, dadurch gekennzeichnet, daß nahe dem Boden (21) des Anschlußstückes (20) zwischen der äußeren Mantelfläche des Endstückes (18) der Waschflüssigkeitsleitung (17) und der inneren Mantelfläche des Anschlußstückes (20) eine Radialdichtung vorzugsweise durch einen O-Ring (45) realisiert ist.

16. Scheibenreinigungsanlage nach Anspruch 15, dadurch gekennzeichnet, daß in axialem Abstand von dieser Radialdichtung eine weitere Dichtung zwischen dem Anschlußstück (20) und dem Endstück der Waschflüssigkeitsleitung (17) vorgesehen ist und daß zwischen diesen beiden Dichtungen eine vorzugsweise gefettete Lagerfläche (51) zwischen dem Endstück (18) der Waschflüssigkeitsleitung (17) und dem Anschlußstück (20) vorgesehen ist.

17. Scheibenreinigungsanlage nach Anspruch 16, dadurch gekennzeichnet, daß von der Stirnfläche des Anschlußstückes (20) axial eine Dichtlippe (47) absteht, die an einem Radialflansch (48) an der Waschflüssigkeitsleitung (17) dichtend anliegt.

18. Scheibenreinigungsanlage nach Anspruch 16, dadurch gekennzeichnet, daß in einer Nut in der Stirnfläche des Anschlußstückes (20) ein Dichtring (55) angeordnet ist, der an einem Radialflansch (48) an der Waschflüssigkeitsleitung (17) dichtend anliegt.

19. Scheibenreinigungsanlage nach Anspruch 17 oder 18, dadurch gekennzeichnet, daß von dem Radialflansch (48) axial ein die Dichtlippe (47) bzw. den Dichtring (55) übergreifender Ringflansch (49) absteht.

20. Scheibenreinigungsanlage nach Anspruch 16, dadurch gekennzeichnet, daß die Stirnfläche des Anschlußstückes (20) in eine Dichtlippe (61) ausläuft, die radial an der äußeren Mantelfläche des Waschflüssigkeitskanals oder der Wischerwelle (11) anliegt.

21. Scheibenreinigungsanlage nach wenigstens einem der Ansprüche 1 bis 14, dadurch gekennzeichnet, daß vom Boden (21) des topfförmigen Anschlußstückes (20) zentrisch ein zylindrischer Ansatz (40) ausgeht, der eine Bohrung (41) als Waschflüssigkeitskanal aufweist, daß zwischen diesem zylindrischen Ansatz (40) und der Seitenwand des Anschlußstückes (20) ein Ringraum (43) gebildet ist, in den ein axial von der Waschflüssigkeitsleiteung (17) abstehender Ringflansch (44) passend eingreift und daß zwischen diessem Ringflansch (44) und dem zylindrischen Ansatz (40) nahe dessen freiem Ende eine Radialdichtung vorzugsweis ein Form eines O-Ringes (45) realisiert ist.

22. Scheibenreinigungsanlage nach Anspruch 21, dadurch gekennzeichnet, daß das Anschlußstück (20) einen Flansch (44) mit einer axialen Anlauffläche an einem zugehörigen Flansch (56) an der Waschflüssigkeitsleitung (17) aufweist und daß zwischen diesen beiden Flanschen eine Dichtung vorzugsweise in Form einer Ringlippe (62) realisiert ist.

23. Scheibenreinigungsanlage nach wenigstens einem der vorhergehenden Ansprüche, dadurch gekennzeichnet, daß das Endstück (18) der Waschflüssigkeitsleitung (17) zu einem in die Bohrung der Wischerwelle (11) eingesetzten oder eingespritzten Rohrstück (17) gehört.

24. Scheibenreinigungsanlage nach Anspruch 23, dadurch gekennzeichnet, daß die Seitenwand des Anschlußstückes (20) über das Endstück (18) dieses Rohrstückes (17) und einen Teilbereich der Wischerwelle (11) gestülpt ist.

25. Scheibenreinigungsanlage nach Anspruch 23, dadurch gekennzeichnet, daß das Endstück (18) des Rohrstückes (17) den Endbereich der Wischerwelle (11) topfartig umgibt und das Anschlußstück (20) lediglich über die Außenwand des Endstückes (18) des Rohrstückes (17) gestülptist.

26. Scheibenreinigungsanlage nach Anspruch 23, dadurch gekennzeichnet, daß das Anschlußstück (20) über das aus der Wischerwelle (11) vorstehende Endstück (18) des Rohrstückes (17) gestülpt ist und mit einer einstückig angeformten Dichtlippe (61) am Endbereich der Mantelfläche der Wischerwelle (11) anliegt.

27. Scheibenreinigungsanlage nach wenigstens einem der vorhergehenden Ansprüche, dadurch gekennzeichnet, daß in das Anschlußstück (20) ein Ventil, vorzugsweise ein Rückschlagventil (110) integriert ist.

28. Scheibenreinigungsanlage nach Anspruch 27, dadurch gekennzeichnet, daß an der Stirnfläche (111) eines zentrisch vom Boden (21) des Anschlußstückes (20) abstehenden, mit einer Axialbohrung (41) versehenen zylindrischen Ansatzes (40) der Ventilsitz für ein Ventilschließglied, vorzugweise eine Kugel (114) ausgebildet ist, und daß sich eine Ventilschließfeder (115) an einer Ringschulter (116) zentrisch zum Rohrstück (17) abstützt, die das Ventilschließglied (114) auf seinen Ventilsitz drückt.

29. Scheibenreinigungsanlage nach Anspruch 1, dadurch gekennzeichnet, daß das Endstück (18) der Waschflüssigkeitsleitung (17) durch eine Bohrung (80) eines ein Getriebegehäuse abschließenden Deckels (81) hindurchragt und das Anschlußstück (20) auf der dem Getriebe abgewandten Außenseite (83) des Deckels (81) verschiebbar befestigt ist.

30. Scheibenreinigungsanlage nach Anspruch 29, dadurch gekennzeichnet, daß auf der Innenseite (84) des Deckels (81) eine Halteplatte (85) verschiebbar festgelegt ist, die durch den Deckel (81) hindurchragende Befestigungsmittel (86,89) aufweist, an denen das Anschlußstück (20) befestigt ist.

31. Scheibenreinigungsanlage nach Anspruch 30, dadurch gekennzeichnet, daß die Befestigungsmittel (86,89) als Rastmittel derart ausgebildet sind, daß nach dem Aufrasten des Anschlußstückes (20) die Halteplatte (85) auf der einen Seite und das Anschlußstück (20) auf der anderen Seite - gegebenfalls unter Zwischenlage eines Dichtringes - mit geringer Spannung am Deckel (81) des Getriebegehäuses anlegen.

32. Scheibenreinigungsanlage nach Anspruch 30 oder 31, dadurch gekennzeichnet, daß die Halteplatte (85) eine Buchse (88) aufweist, die eine Bohrung (80) am Deckel (81) durchdringt, wobei der Außendurchmesser (DB) der Buchse (88) kleiner ist als der Durchmesser (D) der Bohrung (80), und daß von der Außenseite der Buchse (88) Rasthaken (89) abstehen, die hinter einen Flansch am Anschlußstück (20) greifen.

33. Scheibenreinigungsanlage nach Anspruch 32, dadurch gekennzeichnet, daß diese Buchse (88) als Lagerbuchse für die Wischerwelle (11) dient.

34. Scheibenreinigungsanlage nach einem der Ansprüche 30 bis 33, dadurch gekennzeichnet, daß an der Halteplatte (85) mehrere Haltezapfen (86) als Befestigungsmittel vorhanden sind, die jeweils mit seitlichem Spiel durch entsprechende Durchbrüche (87) im Deckel (81) hindurchragen, und daß diese Haltezapfen (86) in Aufnahmelöcher (91) in einem Flansch (92) des Anschlußstückes (20) einrastbar sind.

35. Scheibenreinigungsanlage nach Anspruch 32 oder 33, dadurch gekennzeichnet, daß die Lagerbuchse (88) in eine topfartige Aufnahme am Anschlußstück (20) hineinragt und zwischen der Stirnfläche (97) der Lagerbuchse (88) und einem Ansatz (98) am Anschlußstück (20) ein axial wirkendes Dichtelement (99) vorgesehen ist.

36. Scheibenreinigungsanlage nach Anspruch 35, dadurch gekennzeichnet, daß das Dichtelement (99) außerdem eine Dichtlippe (100) aufweist, die radial absteht und dichtend am Endstück (18) der Waschflüssigkeitsleitung (17) anliegt.

37. Scheibenreinigungsanlage nach Anspruch 36, dadurch gekennzeichnet, daß von der Stirnfläche (97) der Lagerbuchse (88) ein Kragen (101) absteht, der die Dichtlippe (100) axial unterstützt.

38. Scheibenreinigungsanlage nach einem der Ansprüche 30 bis 37, dadurch gekennzeichnet, daß das Anschlußstück (20) einen Lagerbereich für das Endstück (18) der Waschflüssigkeitsleitung (17) aufweist.

## Claims

1. A windshield cleaning system, in particular for motor vehicles, with a shaft (11) rotatably mounted in a bearing bush (12) for driving a wiper arm-and-blade assembly, which shaft includes an axial bore (15) for accommodating and/or forming a washing liquid pipe (17), which during operation of the windshield wiping system oscillates with the shaft (11), the end piece (18) of the washing liquid pipe (17) on the drive end of the shaft (11) projecting axially into a bowl-shaped, with respect to the stationary bearing bush (12) unrotatably secured by an anti-rotation device (24, 25, 26) connecting piece (20) for a washing liquid supply pipe, and means are provided for axial securing of the connecting piece (20) with respect to the end piece (18) and a sealing is provided between the end piece (18) of the washing liquid pipe (17) and the connecting piece (20), characterized in that the connecting piece (20) is held alone by the end piece (18) in a direction transverse to the axial direction of the shaft (11), and in that the antirotation device (24, 25, 26) permits compensation of tolerances in radial direction.

2. A windshield cleaning system as claimed in claim 1, characterized in that the anti-rotation device includes a fork-like stud (24) which projects substantially radially from the connecting piece (20), between the tines (25) of which a stationary holding element (26) which preferably axially projects from the bearing bush (12) is in fitting engagement.

3. A windshield cleaning system as claimed in claim 1, characterized in that the anti-rotation device includes a holding element (26) which projects substantially radially from the connecting piece (20) and which is in fitting engagement between the tines (25) of a stationary fork-like stud (24) which preferably axially projects from the bearing bush (12).

4. A windshield cleaning system as claimed in claim 1, characterized in that the anti-rotation device includes a holding element which projects substantially radially from the connecting piece (20) and is provided with at least one tab (58) being resilient in radial direction, the said tab (58) being in locking engagement with a stationary stud (26).

5. A windshield cleaning system as claimed in claim 4, characterized in that a locking lug (59) projects radially from the tab (58) and snaps in behind a stop (60) on the stationary stud (26), especially into a locking recess, when the connecting piece (20) is slipped onto the end piece (18) of the washing liquid pipe (17).

6. A windshield cleaning system as claimed in at least one of the preceding claims, characterized in that the connecting piece (20) is pressed against a supporting surface (46) at the end piece (18) of the washing liquid pipe (17) via a resilient element (30, 65) acting in axial direction.

7. A windshield cleaning system as claimed in claim 6, characterized in that the resilient element (30) projects radially from a stationary member, preferably from the stationary stud or holding element (26) serving as the anti-rotation device and, preferably centrically, makes catch at the connecting piece (20).

8. A windshield cleaning system as claimed in claim 6 or 7, characterized in that the resilient element (30) is radially inserted into an accommodating slot of a U-formed yoke (31) and is locked there, and in that this yoke (31) in turn is slipped over the free end of a stationary stud (26) and is locked with it.

9. A windshield cleaning system as claimed in claim 6 or 7, characterized in that the resilient element (30) is fixed, preferably screwed, to the end face (57) of a stationary stud (26) so as to be swivellable around an axis in parallel to the wiper shaft (11).

10. A windshield cleaning system as claimed in claims 6 to 9, characterized in that the resilient element is formed as a leaf spring (30) or as a wire yoke (65).

11. A windshield cleaning system as claimed in claim 6 or 7, characterized in that the resilient element is formed as an angularly deflected leaf spring (30), the one leg (33) of which is inserted into a slot (27) in a stationary stud (26) extending in parallel to the wiper shaft (11) and is locked there.

12. A windshield cleaning system as claimed in at least one of the claims 6 to 11, characterized in that the leaf spring (30) comprises a locking recess (32) or a locking knob (35) close to its free end and co-operates with a stud (29) formed respectively and located centrically on the bottom of the connecting piece (20).

13. A windshield cleaning system as claimed in claim 6 or 7, characterized in that the resilient element is a U-formed wire yoke (65), the web (66) of which is fixed onto a stationary stud (26) and the free legs (67) of which abut on holding pins (68) diametrally arranged to each other on the circumference of the connecting piece (20).

14. A windshield cleaning system as claimed in at least one of the claims 6 to 13, characterized in that the resilient element (30, 65), too, permits radial movement of the connecting piece (20) to a certain extent.

15. A windshield cleaning system as claimed in at least one of the preceding claims, characterized in that a radial seal, preferably an O-ring (45), is provided close to the bottom (21) of the connecting piece (20) between the outer circumference of the end piece (18) of the washing liquid pipe (17) and the inner circumference of the connecting piece (20).

16. A windshield cleaning system as claimed in claim 15, characterized in that, at an axial distance from this radial seal, another seal is provided between the connecting piece (20) and the end piece (18) of the washing liquid pipe (17), and in that between these two seals a preferably greased bearing surface (51) is provided between the end piece (18) of the washing liquid pipe (17) and the connecting piece (20).

17. A windshield cleaning system as claimed in claim 16, characterized in that a sealing lip (47) protrudes axially from the end face of the connecting piece (20) and sealingly bears against a radial flange (48) of the washing liquid pipe (17).

18. A windshield cleaning system as claimed in claim 16, characterized in that in a groove in the end face of the connecting piece (20) a sealing ring (55) is arranged which sealingly bears against a radial flange (48) of the washing liquid pipe (17).

19. A windshield cleaning system as claimed in claim 17 or 18, characterized in that a ring flange (49) extending over the sealing lip ( 47 ) or the sealing ring ( 55 ) , respectively, projects axially from the radial flange (48).

20. A windshield cleaning system as claimed in claim 16, characterized in that the end face of the connecting piece (20) ends in a sealing lip (61) which abuts radially on the outer circumference of the washing liquid pipe or of the wiper shaft (11).

21. A windshield cleaning system as claimed in at least one of the claims 1 to 14, characterized in that a cylindrical stud (40) starts centrically off from the bottom (21) of the bowl-like connecting piece (20) and comprises a bore (41) as a washing liquid channel, in that between this cylindrical stud (40) and the side wall of the connecting piece (20) a ring space (43) is formed into which a ring flange (44) projecting axially from the washing liquid pipe (17) is in fitting engagement, and in that between this ring flange (44) and the cylindrical stud ( 40 ) close to said' s free end a radial seal is provided, preferably in the form of an O-ring (45).

22. A windshield cleaning system as claimed in claim 21, characterized in that the connecting piece (20) comprises a flange (44) with an axial abutment surface on a pertinent flange (56) on the washing liquid pipe (17), and in that between these two flanges a seal is provided, preferably in the form of a ring lip (62).

23. A windshield cleaning system as claimed in at least one of the preceding claims, characterized in that the end piece (18) of the washing liquid pipe (17) belongs to a pipe portion (17) inserted or injection-moulded into the bore of the wiper shaft (11).

24. A windshield cleaning system as claimed in claim 23, characterized in that the side wall of the connecting piece (20) is slipped over the end piece (18) of this pipe portion (17) and a part of the wiper shaft (11).

25. A windshield cleaning system as claimed in claim 23, characterized in that the end piece (18) of the pipe portion (17) surrounds the end area of the wiper shaft (11) like a bowl, and the connecting piece (20) is only put over the outer wall of the end piece ( 18 ) of the pipe portion (17).

26. A windshield cleaning system as claimed in claim 23, characterized in that the connecting piece (20) is put over the end piece (18) of the pipe portion (17) extending from the wiper shaft (11) and abuts on the end of the circumference of the wiper shaft ( 11 ) by way of a sealing lip (61) integrally formed therewith.

27. A windshield cleaning system as claimed in at least one of the preceding claims, characterized in that a valve, preferably a non-return valve (110), is integrated into the connecting piece (20).

28. A windshield cleaning system as claimed in claim 27, characterized in that the valve seat for a valve closing member, preferably a ball ( 114 ) , is formed on the end face (111) of a cylindrical stud (40) which projects centrically from the bottom (21) of the connecting piece (20) and is provided with an axial bore (41), and in that a valve closing spring (115) is supported on a ring shoulder (116) centrically to the pipe portion (17) and presses the valve closing member (114) onto its valve seat.

29. A windshield cleaning system as claimed in claim 1, characterized in that the end piece (18) of the washing liquid pipe (17) penetrates a bore (80) of a lid (81) closing a gear housing, and in that the connecting piece (20) is movably fixed onto the outer side (83) of the lid (81) remote from the gear.

30. A windshield cleaning system as claimed in claim 29, characterized in that a holding plate (85) is movably fixed on the inner side (84) of the lid (81) and comprises fastening means (86, 89) which penetrate the lid (81) and onto which the connecting piece (20) is secured.

31. A windshield cleaning system as claimed in claim 30, characterized in that the fastening means (86, 89) are formed as locking lugs in such a way that after the connecting piece (20) is locked, the holding plate (85) on the one side and the connecting piece ( 20 ) on the other side - if necessary, by interposing a sealing ring - abut on the lid (81) of the gear housing with little tension.

32. A windshield cleaning system as claimed in claim 30 or 31, characterized in that the holding plate (85) comprises a bush (88) penetrating a bore (80) on the lid (81), the outer diameter (DB) of the bush (88) being smaller than the diameter (D) of the bore (80), and in that locking hooks (89) project from the outer side of the bush (88) and engage a flange on the connecting piece (20) from behind.

33. A windshield cleaning system as claimed in claim 32, characterized in that this bush (88) serves as a bearing bush for the wiper shaft (11).

34. A windshield cleaning system as claimed in any one of the claims 30 to 33, characterized in that the holding plate (85) is furnished with several holding pins (86) as fastening means, each of which extends through respective apertures (87) in the lid (81) with lateral play, and in that these holding pins (86) are engageable in accommodating holes (91) in a flange (92) of the connecting piece (20).

35. A windshield cleaning system as claimed in claim 32 or 33, characterized in that the bearing bush (88) projects into a bowl-like accommodating element on the connecting piece (20), and in that an axially acting sealing element (99) is provided between the end face (97) of the bearing bush (88) and a stud (98) on the connecting piece (20).

36. A windshield cleaning system as claimed in claim 35, characterized in that the sealing element (99), further, comprises a sealing lip (100) which projects radially and sealingly abuts on the end piece (18) of the washing liquid pipe (17).

37. A windshield cleaning system as claimed in claim 36, characterized in that a collar (101) projects from the end face (97) of the bearing bush (88) and provides axial support of the sealing lip (100).

38. A windshield cleaning system as claimed in any one of the claims 30 to 37, characterized in that the connecting piece (20) comprises a bearing area for the end piece (18) of the washing liquid pipe (17).

## Revendications

1. Dispositif de nettoyage de glace, notamment pour véhicule automobile, comprenant un axe (11) qui sert à entraîner un essuie-glace et est monté d'une manière rotative dans une douille de portée (12) et qui comporte un alésage axial (15) destiné à recevoir et/ou à former un conduit de liquide de lavage (17) qui oscille avec l'essuie-glace pendant le fonctionnement du dispositif de nettoyage de glace, tandis qu'à l'extrémité de l'axe (11) située du côté d'entrée de l'entraînement, la partie extrême (18) du conduit de liquide de lavage fait saillie axialement dans une pièce (20) de raccordement d'un tuyau d'alimentation en liquide de lavage qui a la forme d'un capuchon et est immobilisée en rotation par rapport à la douille de portée fixe (12) par des moyens d'immobilisation en rotation, des moyens étant prévus pour fixer axialement la pièce de raccordement (20) par rapport à ladite partie extrême (18), et une garniture d'étanchéité étant prévue entre cette partie extrême (18) et la pièce de raccordement (20), caractérisé en ce que la pièce de raccordement (20) est uniquement maintenue par la partie extrême (18) dans une direction transversale à la direction axiale de l'axe (11) et en ce que les moyens d'immobilisation en rotation (24, 25, 26) permettent une compensation des jeux dans la direction radiale.

2. Dispositif de nettoyage de glace suivant la revendication 1, caractérisé en ce que les moyens d'immobilisation en rotation comprennent une partie en saillie (24), en forme de fourche, qui se dresse d'une manière pratiquement radiale sur la pièce de raccordememt (20) et entre les branches (25) de laquelle s'emboîte d'une manière ajustée un élément de maintien (26) qui se dresse axialement sur la douille de portée (12).

3. Dispositif de nettoyage de glace suivant la revendication 1, caractérisé en ce que les moyens d'immobilisation en rotation comprennent un élément de maintien (26) qui se dresse d'une manière pratiquement radiale sur la pièce de raccordement (20) et qui s'emboîte d'une manière ajustée entre les branches (25) d'une partie en saillie (24) en forme de fourche qui est fixe et se dresse de préférence axialement sur la douille de portée (12).

4. Dispositif de nettoyage de glace suivant la revendication 1, caractérisé en ce que les moyens d'immobilisation en rotation comprennent un élément de maintien qui se dresse d'une manière pratiquement radiale sur la pièce de raccordement (20) et qui comporte au moins une languette (58) ayant un comportement élastique dans la direction axiale, cette languette (58) se verrouillant avec une partie en saillie (26) qui est fixe.

5. Dispositif de nettoyage de glace suivant la revendication 4, caractérisé en ce qu'un nez d'enclenchement (59) se dresse radialement sur la languette (58), ce nez d'enclenchement (59) s'enclenchant derrière une butée (60) ménagée sur la partie en saillie (26) fixe, notamment dans un évidement d'enclenchement, lorsque la pièce de raccordement (20) est emboîtée sur la partie extrême (18) du conduit de liquide de lavage (17).

6. Dispositif de nettoyage de glace suivant au moins l'une des revendications précédentes, caractérisé en ce que la pièce de raccordement (20) est appliquée par un élément élastique (30, 65), exerçant son action dans la direction axiale, contre une surface d'appui (46) située sur la partie extrême (18) du conduit de liquide de lavage (17).

7. Dispositif de nettoyage de glace suivant la revendication 6, caractérisé en ce que l'élément élastique (30) se dresse radialement sur une partie fixe, de préférence sur la partie en saillie ou l'élément de maintien (26) qui est fixe et sert de moyens d'immobilisation en rotation, et en ce qu'il exerce de préférence son action sur la pièce de raccordement (20) en son centre.

8. Dispositif de nettoyage de glace suivant l'une des revendications 6 et 7, caractérisé en ce que l'élément élastique (30) est emboîté radialement et verrouillé dans une fente réceptrice d'un étrier (31) en U et en ce que cet étrier (31) est lui-même emboîté par-dessus l'extrémité libre d'une partie en salle (26) fixe et est verrouillé sur cette extrémité libre.

9. Dispositif de nettoyage de glace suivant l'une des revendications 6 et 7, caractérisé en ce que l'élément élastique (30) est fixé, de préférence vissé, sur la surface frontale (57) d'une partie en saillie (26) fixe, de façon à pouvoir pivoter autour d'un axe parallèle à l'axe d'essuie-glace (11).

10. Dispositif de nettoyage de glace suivant l'une des revendications 6 à 9, caractérisé en ce que l'élément élastique est réalisé sous la forme d'un ressort à lame (30) ou sous la forme d'un étner en fil métallique (65).

11. Dispositif de nettoyage de glace suivant l'une des revendications 6 et 7, caractérisé en ce que l'élément élastique est réalisé sous la forme d'un ressort à lame (30) qui est plié d'une manière coudée et dont une branche (33) est emboitée et verrouillée dans une fente (27) qui est ménagée dans un partie en saillie (26) fixe et qui s'étend parallèlement à l'axe d'essuie-glace (11).

12. Dispositif de nettoyage de glace suivant au moins l'une des revendications 6 à 11, caractérisé en ce que le ressort à lame (30) comporte, près de son extrémité libre, une partie repoussée d'enclenchement (32) ou une partie surélevée d'enclenchement (36) et en ce qu'il coopère avec une partie en saillie (29) qui est agencée d'une manière associée et est disposée sur le fond dé la pièce de raccordement (20) en son centre.

13. Dispositif de nettoyage de glace suivant l'une des revendications 6 et 7, caractérisé en ce que l'élément élastique est un étrier en fil métallique (65) en U dont la base (66) est fixée à une partie en saillie (26) fixe et dont les branches libres (67) prennent appui sur des tétons de maintien (68) disposés d'une manière diamétralement opposée sur la surface périphérique de la pièce de raccordement (20).

14. Dispositif de nettoyage de glace suivant au moins l'une des revendications 6 à 13, caractérisé en ce que l'élément élastique (30, 65) autorise aussi dans une certaine mesure un déplacement radial de la pièce de raccordement (20).

15. Dispositif de nettoyage de glace suivant au moins l'une des revendications précédentes, caractérisé en ce que, près du fond (21) de la pièce de raccordement (20), une étanchéité radiale est réalisée, de préférence au moyen d'un joint torique (45), entre la surface périphérique extérieure de la partie extrême (18) du conduit de liquide de lavage (17) et la surface périphérique intérieure de la pièce de raccordement (20).

16. Dispositif de nettoyage de glace suivant la revendication 15, caractérisé en ce qu'à une certaine distance axiale desdits moyens d'étanchéité radiale, il est prévu d'autres moyens d'étanchéité entre la pièce de raccordement (20) et la partie extrême du conduit de liquide de lavage (17) et en ce qu'entre ces différents moyens d'étanchéité, il est prévu une surface de portée (51), de préférence graissée, entre la partie extrême (18) du conduit de liquide de lavage (17) et la pièce de raccordement (20).

17. Dispositif de nettoyage de glace suivant la revendication 16, caractérisé en ce qu'une lèvre d'étanchéité (47) se dresse axialement sur la surface frontale de la pièce de raccordement (20) et prend appui d'une manière étanche sur une collerette radiale (48) prévue sur le conduit de liquide de lavage (17).

18. Dispositif de nettoyage de glace suivant la revendication 16, caractérisé en ce qu'une bague d'étanchéité (55) est disposée dans une gorge ménagée dans la surface frontale de la pièce de raccordement (20) et prend appui de manière étanche sur une collerette radiale (48) réalisée sur le conduit de liquide de lavage (17).

19. Dispositif de nettoyage de glace suivant l'une des revendications 17 et 18, caractérisé en ce qu'une collerette annulaire (49) se dresse axialement sur la collerette radiale (48) et couvre la lèvre d'étanchéité (47) ou la bague d'étanchéité (55).

20. Dispositif de nettoyage de glace suivant la revendication 16, caractérisé en ce que la surface frontale de la pièce de raccordement (20) se termine par une lèvre d'étanchéité (61) qui prend appui radialement sur la surface périphérique extérieure du conduit de liquide de lavage ou de l'axe d'essuie-glace (11).

21. Dispositif de nettoyage de glace suivant au moins l'une des revendications 1 à 14, caractérisé en ce qu'une partie en saillie (40) cylindrique se dresse sur, le fond (21) de la pièce de raccordement (20) en forme de capuchon en son centre et comporte un alésage (41) servant de conduit de liquide de lavage, en ce qu'entre cette partie en saillie (40) cylindrique et la paroi latérale de la pièce de raccordement (20), il est formé un espace annulaire (43) dans lequel s'emboite d'une manière ajustée un collet annulaire (44) qui se dresse axialement sur le conduit de liquide de lavage (17) et en ce qu'une étanchéité radiale, se présentant de préférence sous la forme d'un joint torique (45), est réalisée entre le collet annulaire (44) et la partie en salle (40) cylindrique près de son extrémité libre.

22. Dispositif de nettoyage de glace suivant la revendication 21, caractérisé en ce que la pièce de raccordement (20) comporte un rebord (56) présentant une surface d'appui axial sur une collerette (48) associée réalisée sur le conduit de liquide de lavage (17) et en ce qu'une étanchéité, se présentant de préférence sous la forme d'une lèvre annulaire (62), est réalisée entre ce rebord et cette collerette.

23. Dispositif de nettoyage de glace suivant au moins l'une des revendications précédentes, caractérisé en ce que la partie extrême (18) du conduit de liquide de lavage (17) fait partie d'un tronçon de tube (17) qui est emboîté dans l'alésage de l'axe d'essuie-glace (11) ou qui est mis en place dans cet alésage par injection.

24. Dispositif de nettoyage de glace suivant la revendication 23, caractérisé en ce que la paroi latérale de la pièce de raccordement (20) coiffe la partie extrême (18) dudit tronçon de tube (17) et une partie de l'axe d'essuie-glace (11).

25. Dispositif de nettoyage de glace suivant la revendication 23, caractérisé en ce que la partie extrême (18) du tronçon de tube (17) entoure l'extrémité de l'axe d'essuie-glace (11) à la façon d'un capuchon et en ce que la pièce de raccordement (20) ne coiffe que la paroi extérieure de cette partie extrême (18) du tronçon de tube (17).

26. Dispositif de nettoyage de glace suivant la revendication 23, caractérisé en ce que la pièce de raccordement (20) coiffe la partie extrême (18) du tronçon de tube (17) qui fait saillie hors de l'axe d'essuie-glace (11) et en ce qu'elle prend appui par une lèvre d'étanchéité (61), venue d'une pièce au formage, sur l'extrémité de la surface périphérique de l'axe d'essuie-glace (11).

27. Dispositif de nettoyage de glace suivant au moins lune des revendications précédentes, caractérisé en ce qu'une valve, de préférence un clapet antiretour (110), est intégrée dans la pièce de raccordement (20).

28. Dispositif de nettoyage de glace suivant la revendication 27, caractérisé en ce que, sur la surface frontale (111) d'une partie en saillie (40) cylindrique qui se dresse sur le fond (21) de la pièce de raccordement (20) en son centre et est pourvue d'un alésage axial (41), il est réalisé un siège de valve pour l'organe obturateur de valve, de préférence une bille (14), et en ce qu'un ressort de fermeture de valve (115), qui applique l'organe obturateur de valve (14) sur son siège de valve, prend appui sur un epaulement annulaire (116) d'une manière centrée vis-à-vis du tronçon de tube (17).

29. Dispositif de nettoyage de glace suivant la revendication 1, caractérisé en ce que la partie extrême (18) du conduit de liquide de lavage (17) fait saillie par un trou (80) d'un couvercle (81) qui ferme un boitier de réducteur et en ce que la pièce de raccordement (20) est fixée sur la face extérieure (83) du couvercle (81) qui est situé à l'opposé du réducteur, d'une manière lui permettant un mouvement de translation.

30. Dispositif de nettoyage de glace suivant la revendication 29, caractérisé en ce qu'une plaque de maintien (85) est fixée sur la face intérieure (84) du couvercle (81) d'une manière lu permettant un déplacement en translation, cette plaque de maintien (85) comportant des moyens de fixation (86, 89) qui traversent le couvercle (81) et sur lesquels la pièce de raccordement (20) est fixée.

31. Dispositif de nettoyage de glace suivant la revendication 30, caractérisé en ce que les moyens de fixation (86, 89) sont réalisés sous la forme de moyens d'enclenchement, d'une façon telle qu'après l'enclenchement de la pièce de raccordement (20), la plaque de maintien (85) et la pièce de raccordement (20) prennent appui avec une faible contrainte sur le couvercle (81) du boitier de réducteur, la première sur l'une de ses faces et la seconde sur l'autre face, éventuellement moyennant l'interposition d'une bague d'étanchéité.

32. Dispositif de nettoyage de glace suivant l'une des revendications 30 et 31, caractérisé en ce que la plaque de maintien (85) comporte un manchon (88) qui traverse un trou (80), ménagé dans le couvercle (81), le diamètre extérieur (DB) du manchon (88) étant inférieur au diamètre (D) du trou (80) et en ce que des crochets d'enclenchement (89) se dressent sur la face extérieure du manchon (88) et s'accrochent derrière un rebord de la pièce de raccordement (20).

33. Dispositif de nettoyage de glace suivant la revendication 32, caractérisé en ce que ledit manchon (88) sert de douille de portée pour l'axe d'essuie-glace (11).

34. Dispositif de nettoyage de glace suivant l'une des revendications 30 à 33, caractérisé en ce que, sur la plaque de maintien (85), il est prévu plusieurs tétons de maintien (86) qui servent de moyens de fixation et qui font saillie chacun avec un jeu transversal par un passage (87) associé ménagé dans le couvercle (81) et en ce que ces tétons de maintien (86) sont agencés de façon à pouvoir s'enclencher dans des trous récepteurs (91) ménagés dans un rebord (90) de la pièce de raccordement (20).

35. Dispositif de nettoyage de glace suivant l'une des revendications 32 et 33, caractérisé en ce que la douille de portée (88) s'engage dans un logement en forme de cuvette qui est ménagé dans la pièce de raccordement (20) et en ce qu'un élément d'étanchéité (99), exerçant son action axialement, est prévu entre la surface frontale (97) de la douille de portée (88) et une partie en saillie (98) réalisée sur la pièce de raccordement (20).

36. Dispositif de nettoyage de glace suivant la revendication 35, caractérisé en ce que l'élément d'étanchéité (99) comporte en outre une lèvre d'étanchéité (100) qui se dresse radialement et prend appui d'une manière étanche sur la partie extrême (18) du conduit de liquide de lavage (17).

37. Dispositif de nettoyage de glace suivant la revendication 36, caractérisé en ce qu'un collet (101) se dresse sur la surface frontale (97) de la douille de portée (88) et soutient axialement la lèvre d'étanchéité (100).

38. Dispositif de nettoyage de glace suivant l'une des revendications 30 à 37, caractérisé en ce que la pièce de raccordement (20) comporte une zone de portée pour la partie extrême (18) du conduit de liquide de lavage (17).
